# EUROPÄISCHE PATENTANMELDUNG

(11) **EP 0 611 568 A1**
(43) Veröffentlichungstag der Anmeldung: **24.08.1994**
(21) Anmeldenummer: 94101698.2
(22) Anmeldetag: 04.02.1994
(51) Int. Cl.: A61K 31/20, A61K 31/23, A23L 1/30

(54) **Präparat zur enteralen Ernährung**

(30) Priorität: 13.02.1993 DE 4304394
(71) Anmelder: Fresenius AG, D-61350 Bad Homburg v.d.H (DE)
(72) Erfinder: Dr.Schulz, Sabine, D-35396 Giessen-Wieseck (DE); Dr. Kessler, Barbara, D-61476 Kronberg (DE); Roosen, Ursula, D-69126 Heidelberg (DE); Riedel, Angelika, D-61279 Grävenwiesbach (DE)
(74) Vertreter: Fuchs, Luderschmidt & Partner Patentanwälte

(57) **Zusammenfassung**

Gegenstand sind Präparate zur enteralen Ernährung, insbesondere von onkologischen Patienten, wobei die Präparate Fette und gegebenenfalls Kohlenhydrate und/oder Proteine sowie gegebenenfalls andere übliche Nährstofe, Hilfsstoffe und Zusatzstoffe enthalten. Diese Präparate sind durch die Kombination eines hohen Fettangebotes mit einer speziellen Fettkomponente, die durch das spezielle Fettsäuremuster und das spezielle Verhältnis der Omega-3-Fettsäuren zu den Omega-6-Fettsäuren charakterisiert ist, auf die besonderen Stoffwechselverhältnisse der Tumorpatienten ausgerichtet. Und zwar sowohl im Hinblick auf die energetische Versorgung der Patienten als auch zur Unterstützung seiner Abwehrlage. Die Fettkomponente der erfindungsgemäßen Präparate weist das folgende Fettsäuremuster, angegeben in Gewichtsprozent, bezogen auf den Gesamtfettgehalt auf, wobei die Fettsäuren sowohl in freier Form als auch in Form von verträglichen Salzen und/oder Estern vorliegen können:

| | |
|---|---|
| Ölsäure | 30-55 Gew.-% |
| Linolsäure | 3-20 Gew.-% |
| alpha-Linolensäure | 0,5-8 Gew.-% |
| Eicosapentaensäure und Docosahexaensäure zusammen | 1-10 Gew.-% |
| sonstige Omega-3-Fettsäuren | 0-0,5 Gew.-%, |

wobei das Verhältnis der Omega-3-Fettsäuren zu den Omega-6-Fettsäuren im Bereich von 1:2,1 bis 1:3 liegt.

In den erfindungsgemäßen Präparaten kann, bezogen auf das gesamte Präparat, der Fettgehalt 40-65 Energieprozent, der Proteingehalt 12-25 Energieprozent und der Kohlenhydratgehalt 20-45 Energieprozent ausmachen. Die Fettkomponente kann auch MCT enthalten.

## Beschreibung

Gegenstand der vorliegenden Erfindung sind Präparate zur enteralen Ernährung, insbesondere zur enteralen Ernährung von onkologischen Patienten, die Fett und gegebenenfalls Protein und/oder Kohlenhydrate sowie ggf. andere übliche Nährstoffe, Hilfs- und/oder Zusatzstoffe enthalten.

Onkologischen Patienten gemeinsam ist die bei ihnen häufig auftretende Kachexie, die durch Anorexie, körperliche Schwäche, Anämie und progredienten Gewichtsverlust gekennzeichnet ist. Diesen Patienten gelingt es häufig nicht, auch bei adäquater Energie- und Proteinzufuhr, den Gewichtsverlust zu verhindern oder wieder an Gewicht zuzunehmen.

Die Ursachen der Tumorkachexie liegen in einer häufig verminderten Nahrungszufuhr, gekoppelt mit dramatischen Stoffwechselveränderungen. Dazu gehören die gestörte Glucoseutilisation und erhöhte gluconeogenetische Aktivität sowie die Mobilisierung von Körperfett und eine erhöhte Fettoxidationsrate. Beim Tumorpatienten liegt somit eine dem Gesunden gegenüber geänderte Substratverwertung vor. Beim Tumorpatienten wird die Energie bevorzugt aus Fett gewonnen. Im Gegensatz dazu wird vom malignen Gewebe überwiegend Glucose zur Energiegewinnung herangezogen. Eine Fettverwertung ist dort kaum nachzuweisen. Daraus ergibt sich die Notwendigkeit, den Tumorpatienten nicht nur ausreichend Energie anzubieten, sondern eine Nahrung, die dem Stoffwechsel des Patienten angepaßt ist, d.h. die viel Fett und wenig Kohlenhydrate enthält. Die Kachexie ist ein wesentliches Merkmal bei vielen Tumorpatienten und häufig die direkte Todesursache.

Es wurden bereits zahlreiche Versuche unternommen, um eine für den Tumorpatienten geeignete kohlenhydratarme und fettreiche Nahrung bereitzustellen.

So wird zum Beispiel in der EP-Patentanmeldung 0 378 824 die Verwendung von Omega-3-Fettsäuren als Antikachexiemittel vorgeschlagen, wobei vorzugsweise Eicosapentaensäure und Docosahexaensäure als Omega-3-Fettsäuren eingesetzt werden und zwar zweckmäßigerweise in Form von Fischöl. Die in der EP-Anmeldung vorgeschlagene Diät ist extrem kohlenhydratarm und enthält verdaubares Protein nur in ernährungsphysiologisch notwendiger Menge, wobei Fett 88 Energieprozent, Protein etwa 8 Energieprozent und Kohlenhydrate etwa 3,8 Energieprozent ausmachen. Neben Omega-3-Fettsäuren (in Form von Fischöl) ist anderes verdaubares Fett vorzugsweise in Form von mittelkettigen Fettsäuren enthalten.

Eicosapentaensäure (EPA, C20:5, n-3) wird vorzugsweise im wesentlichen frei von anderen polyungesättigten Fettsäuren auch in der PCT-Anmeldung WO 90/11073 zur Behandlung von Kachexie vorgeschlagen.

In der EP-Patentanmeldung 0 367 724 werden immunostimulierende Präparate beschrieben, die auch bei Tumorpatienten eingesetzt werden und neben Arginin, Argininpräcusoren und Ornithin eine Quelle für Nukleobasen sowie Omega-3- und Omega-6-Fettsäuren enthalten. Diese Präparate können auch in Form einer flüssigen kompletten Formeldiät vorliegen, wobei im Gemisch der Fettgehalt 15 bis 30 Energieprozent, der Kohlenhydratgehalt 40 bis 70 Energieprozent und die Stickstoffquelle 15 bis 30 Energieprozent ausmachen. Die Fettkomponente enthält neben Omega-3- und Omega-6-Fettsäuren auch MCT und/oder LCT.

Beim Handelsprodukt Impact^{(R)}, das auch Tumorpatienten verabreicht wird, handelt es sich um ein Produkt für die enterale Ernährung bei metabolischem Streß mit Sepsisgefahr. Der Fettgehalt macht 25 Energieprozent, der Eiweißgehalt 22 Energieprozent und der Kohlenhydratgehalt 53 Energieprozent des Produktes aus, wobei im Fett 2,2 Energieprozent Linolsäure, 3 Energieprozent Omega-3-Fettsäuren, 5,5 Energieprozent MCT und 5,1 Energieprozent monoungesättigte Fettsäuren enthalten sind.

Diese bekannten Produkte weisen zahlreiche Nachteile auf. Insbesondere ist mit ihnen keine für Tumorpatienten optimale Nährstoffverwertung gewährleistet. Weiterhin ist die Verwendung eines zu hohen Fettgehaltes im Präparat, wie zum Beispiel gemäß der EP-Patent- anmeldung 0 378 824 hinsichtlich der Ernährung von Langzeitpatienten, zu denen bekanntlich Tumorpatienten gehören, ungeeignet. Derartige Präparate können zu Stoffwechselstörungen, Unverträglichkeitserscheinungen, wie zum Beispiel Völlegefühl, Störungen der Fettverdauung, Erhöhung der Blutfettwerte, und dergleichen führen.

Es besteht daher nach wie vor ein Bedarf an geeigneten Präparaten zur enteralen Ernährung, insbesondere von onkologischen Patienten.

Der vorliegenden Erfindung lag daher die Aufgabe zugrunde, ein Präparat zur enteralen Ernährung, insbesondere von onkologischen Patienten, bereitzustellen, das die Nachteile der bekannten Produkte nicht aufweist und eine Nahrung darstellt, die verträglich ist und dem Stoffwechsel der onkologischen Patienten besser angepaßt ist als die bisher bekannten Produkte.

Erfindungsgemäß wurde überraschend gefunden, daß diese Aufgabe mit einem Präparat gelöst werden kann, bei dem die Fettkomponente das folgende Fettsäuremuster in Gewichtsprozent, bezogen auf den Gesamtfettsäuregehalt, aufweist:

| | |
|---|---|
| Ölsäure | 30-55 Gew.-% |
| Linolsäure | 3-20 Gew.-% |
| alpha-Linolensäure | 0,5-8 Gew.-% |
| Eicosapentaensäure und Docosahexaensäure zusammen | 1-10 Gew.-%, |
| sonstige Omega-3-Fettsäuren | 0-0,5 Gew.-% |

wobei das Verhältnis der Omega-3-Fettsäuren zu den Omega-6-Fettsäuren im Bereich von 1:2,1 bis 1:3 liegt.

Es wurde festgestellt, daß für onkologische Patienten nicht nur die Quantität und das Verhältnis der Energieträger untereinander entscheidend ist, sondern auch die Qualität des angebotenen Fettes von besonderer Bedeutung ist.

Die erfindungsgemäßen Präparate weisen vorzugsweise folgendes Fettsauremuster auf, wobei die Angaben in Gewichtsprozent erfolgen und sich auf den Gesamtfettsäuregehalt beziehen:

| | |
|---|---|
| Ölsäure | 37-50 Gew.-% |
| Linolsäure | 5-15 Gew.-% |
| alpha-Linolensäure | 0,8-5 Gew.-% |
| Eicosapentaensäure und Docosahexaensäure zusammen | 1,5-5 Gew.-%, |
| sonstige Omega-3-Fettsäuren | 0-0,3 Gew.-%, |

wobei das Verhältnis der Omega-3-Fettsäuren zu den Omega-6-Fettsäuren im Bereich von 1:2,3 bis 1:2,7 liegt.

Insbesondere zeigt das erfindungsgemäß angewandte Fett das folgende Fettsäuremuster, wobei die Angaben in Gewichtsprozent vorliegen und sich auf den Gesamtfettsäuregehalt beziehen:

| | |
|---|---|
| Ölsäure | 40-47 Gew.-% |
| Linolsäure | 7-13 Gew.-% |
| alpha-Linolensäure | 1-2 Gew.-% |
| Eicosapentaensäure und Docosahexaensäure zusammen | 2-3,5 Gew.-%, |
| sonstige Omega-3-Fettsäuren, | 0-0,2 Gew.-%, |
| vorzugsweise | 0,1-0,2 Gew.-%, |

wobei das Verhältnis der Omega-3-Fettsäuren zu den Omega-6-Fettsäuren im Bereich von 1:2,3 bis 1:2,7,vorzugsweise im Bereich von 1:2,4 bis 1:2,6 liegt.

Das Verhältnis der Omega-3-Fettsäuren zu den Omega-6-Fettsäuren liegt im Bereich zwischen 1:2,1 bis 1:3, vorzugsweise im Bereich 1:2,3 bis 1:2,7 und insbesondere im Bereich von 1:2,4 bis 1:2,6 und beträgt beispielsweise 1:2,5. Erfindungsgemäß werden zu den Omega-3-Fettsäuren die alpha-Linolensäure, die Eicosapentaensäure, die Docosahexaensäure und weitere, in geringen Mengen in Ölen vorliegende Omega-3-Fettsäuren gerechnet, während die Linolsäure als Vertreter der Omega-6-Fettsäuren im anmeldungsgemäßen Präparat vorliegt und im vorstehend genannten Verhältnis die Omega-6-Fettsäure darstellt. Der gemeinsame Anteil von Eicosapentaensäure und Docosahexaensäure an den im Präparat vorliegenden Omega-3-Fettsäuren macht 40 bis 80 Gewichtsprozent, vorzugsweise 50 bis 70 Gewichtsprozent und insbesondere 55 bis 60 Gewichtsprozent, z.B. 58 Gewichtsprozent aus.

Im erfindungsgemäßen Präparat können die Fettsäuren in freier Form oder in Form von Estern oder Salzen enthalten sein. Beispiele für geeignete Ester sind: die Glycerinester, in Form Mono-, Di- und/oder Triglyceriden..

Beispiele für geeignete Salze sind z.B. die Natriumsalze.

Geeigneterweise können die Fettsäuren in Form von geeigneten Ölen und/oder strukturierten Lipiden eingesetzt werden. So kann die Ölsäure als einfach ungesättigte Fettsäure in Form eines Pflanzenöles, das mindestens 75 Gewichtsprozent Ölsäure enthält, zum Beispiel Olivenöl oder in Form eines Öles mit dem gleichen Anteil an Ölsäure auf Hybridbasis, z.B. ölsäurereiches Sonnenblumenöl auf Hybridbasis, vorzugsweise in Form von ölsäurereichem Sonnenblumenöl, die Linolsäure durch ein linolsäurereiches Öl, das mindestens 70 Gewichtsprozent Linolsäure enthält, zum Beispiel Safloröl, Weizenkeimöl, vorzugsweise in Form von Safloröl, die alpha-Linolensäure durch ein Öl, das mindestens 45 Gewichtsprozent alpha-Linolensäure enthält, vorzugsweise Leinöl, und die Eicosapentaensäure und die Docosahexaensäure durch Fischöl, das mindestens 30 Gewichtsprozent dieser Omega-3-Fettsäuren enthält, zum Beispiel Fischöle von z.B. Sardine, Lachs, Sardelle, Thunfisch, Hering, Seehecht, Menhaden und/oder Pilchard, oder Gemische dieser Fischöle, Fischölkonzentrate und Fischölemulsionen mit einem Gehalt von mindestens 30 Gewichtsprozent dieser Omega-3-Fettsäuren, vorzugsweise durch ein Gemisch von Fischölen eingebracht werden. Geeignete Fischölemulsionen sind solche, wie sie z.B. in der DE-PS 37 22 540 beschrieben sind.

Die in den erfindungsgemäßen Präparaten enthaltene Fettkomponente enthält vorzugsweise auch mittelkettige Triglyceride (MCT). Diese MCT-Fette liegen, bezogen auf die gesamte Fettmenge, im allgemeinen in Mengen im Bereich von 10-60 Gew.-%, vorzugsweise im Bereich von 20-50 Gew.-% und insbesondere im Bereich von 30-40 Gew.-% vor.

Die erfindungsgemäßen Präparate können als solche verabreicht werden, z.B. abgefüllt in Gelatinekapseln, oder können als solche oder ggf. abgefüllt in Gelatinekapseln als Zusatz zu einer Diät dienen oder können auch als komplette Formeldiät formuliert sein. Sie können eine bilanzierte Diät darstellen und in geeigneter Form, vorzugsweise als Trink- und/oder Sondennahrung eingesetzt werden.

Gemäß einer bevorzugten Ausführungsform macht in den erfindungsgemäßen Präparaten zur enteralen Ernährung die Fettkomponente 40 bis 65 Energieprozent, vorzugsweise 45 bis 60 Energieprozent und insbesondere 50 Energieprozent aus, während die Proteinkomponente zu 12 bis 25 Energieprozent, vorzugsweise 15 bis 22 Energieprozent und insbesondere 18 Energieprozent und die Kohlenhydratkomponente zu 20 bis 45 Energieprozent, vorzugsweise 25 bis 40 Energieprozent und insbesondere 32 Energieprozent in den Präparaten enthalten sein können.

Die erfindungsgemäßen Präparate können in fester oder flüssiger Form, vorzugsweise in flüssiger Form und insbesondere in Form von Trink- und Sondennahrung vorliegen. Feste Formen können geeigneterweise zur Anwendung mit einer entsprechenden Menge an Wasser vermischt werden.

"Feste Formen" umfassen erfindungsgemäß auch solche Zubereitungen, bei denen eine Komponente oder mehrere Komponenten in fester Form, z.B. als Pulver vorliegt bzw. vorliegen und eine Komponente, z.B. die Fettkomponente, oder mehrere Komponenten in flüssiger Form, z.B. abgefüllt in geeignete Behältnisse, wie solche aus Kunststoff oder Glas oder in Gelatinekapseln, vorliegen.

Als Proteinkomponente sind alle Proteine, die üblicherweise für diese Zwecke eingesetzt werden, geeignet, vorzugsweise werden native Proteine oder auch hydrolysierte Formen von Milch-, Erbsen- oder Soja-Eiweiß, zum Beispiel Natrium-, Kalium-, Calcium- oder Magnesiumcaseinat, Molkenproteinhydrolysat, Sojaproteinhydrolysat, Erbsenproteinhydrolysat, Caseinhydrolysat, Magermilchpulver, Gesamtmilcheiweiß, Eiweiß aus Hefe-RNA und dergleichen, und besonders bevorzugt werden Molkenproteinhydrolysat, Natriumcaseinat und/oder ferner Eiweiß aus Hefe-RNA verwendet.

Als Kohlenhydratkomponente geeignet ist jede üblicherweise für die vorliegenden Zwecke geeignete Kohlenhydratkomponente. Zum Beispiel verwendbar sind Maltodextrine, Glucose, Saccharose, Fructose, Xylit, Stärke, modifizierte Stärke oder diese Kohlenhydrate enthaltenden Lebensmittel, wie Fruchtpulver und Gemüsepulver, beispielsweise Bananenpulver, Erbsenpulver, Kartoffelpulver etc., Getreideflocken, z.B. Reisflocken, Hafermehl. Bevorzugt Verwendung finden Maltodextrine, modifizierte Stärke und/oder Hafermehl.

Sowohl die Kohlenhydrate als auch die Eiweiße können einzeln oder in Form von Gemischen aus mehreren Kohlenhydraten bzw. Proteinen eingesetzt werden.

Außer den Grundbestandteilen Fett und gegebenenfalls Protein und Kohlenhydraten sowie gegebenenfalls Wasser, können in den erfindungsgemäßen Präparaten noch weitere übliche Nährstoffe sowie gegebenenfalls übliche Hilfs- und Zusatzstoffe enthalten sein.

Zu üblichen Nährstoffen, die gegebenenfalls enthalten sein können, gehören: Vitamine, Mineralstoffe, Spurenelemente, Nukleotide, freie Aminosäuren, spezielle Peptide sowie Ballaststoffe.

Beispiele für Nukleotide, die den erfindungsgemäßen Präparaten zugesetzt sein können, sind übliche, für die vorliegenden Zwecke geeignete Nukleotide aus zum Beispiel Hefe-RNA.

Als Vitamine geeignet sind alle Vitamine und vitaminähnlichen Verbindungen, wie sie üblicherweise für die vorliegenden Zwecke verwendet werden.

Beispiele für geeignete Vitamine und vitaminähnliche Verbindungen sind Vitamin A, Vitamin D, Vitamin E, Vitamin K₁, Vitamin B₁, B₂, B₆ und B₁₂, Vitamin C, Nicotinsäureamid, Pantothensäure, Biotin, Folsäure, myo-Inosit, Cholin und dergleichen.

Als Mineralstoffe können in den erfindungsgemäßen Präparaten alle Mineralstoffe eingesetzt werden, wie sie üblicherweise für die vorliegenden Zwecke eingesetzt werden. Beispiele für geeignete Mineralstoffe sind Natrium, Kalium, Calcium, Magnesium, Phosphor, Chlorid.

Zu den Spurenelementen, wie sie erfindungsgemäß in den Präparaten enthalten sein können, gehören alle üblicherweise für die vorliegenden Zwecke verwendeten Spurenelemente, beispielsweise Eisen, Zink, Kupfer, Mangan, Chrom, Molybdän, Fluorid, Jodid, Selen.

Als Ballaststoffe geeignet sind die für die menschliche Ernahrung üblichen Ballaststoffe, wie Sojapolysaccharide, Ballaststoffe aus Chicoree, Schwarzwurzeln, Topinambur, Kleien (z.B. Kleien aus Cerealien und Hülsenfrüchten), Guarmehl, Pektin, Gemüsepulver, Fruchtpulver, Getreidepulver und/oder Cellulose.

Diese Zusätze können in den erfindungsgemäßen Präparaten in üblicherweise in solchen Präparaten verwendeten Mengen enthalten sein. Beispielsweise geeignete Mengen sind solche, wie sie in der Literatur vorgeschlagen werden (vgl. "Regelungen für bilanzierte Diäten in der Diätverordnung", Akt. Ernähr. 15 (1990), S. 12, Deutsche Gesellschaft für Ernährung "Empfehlungen für die Nährstoffzufuhr", 5. Überarbeitung 1991, RDA, 10. Ausg., 1989).

Zusätzlich zu den vorstehend genannten Nährstoffen können in den erfindungsgemäßen Präparaten noch gegebenenfalls übliche Hilfsstoffe und Zusatzstoffe enthalten sein, dazu gehören alle üblichen, für die vorliegenden Zwecke geeigneten Hilfs- und Zusatzstoffe, zum Beispiel Aromastoffe, Farbstoffe, Stabilisatoren, Emulgatoren, Antioxidantien, Süßungsstoffe und dergleichen.

Die Herstellung der erfindungsgemäßen Präparate erfolgt in an sich bekannter Weise.

Die erfindungsgemäßen Nahrungspräparate sind durch die Kombination eines hohen Fettangebotes mit einer speziellen Fettkomponente, die durch das spezielle Fettsäuremuster und das spezielle Verhältnis der Omega-3-Fettsäuren zu den Omega-6-Fettsäuren gekennzeichnet ist, auf die besonderen Stoffwechselverhältnisse der Tumorpatienten ausgerichtet.

Die erfindungsgemäßen Präparate enthalten eine optimale Nährstoffzusammensetzung für den Tumorpatienten sowohl im Hinblick auf die energetische Versorgung der Patienten als auch zur Unterstützung seiner Abwehrlage und sind zudem gut verträglich. Insbesondere geeignet sind sie für den Tumorpatienten, bei dem häufig eine Langzeiternährung erforderlich ist. Mit den erfindungsgemäßen Präparaten zur enteralen Ernährung wird den Patienten, insbesondere den Tumorpatienten, einmal eine fettreiche Nahrung angeboten (ausgerichtet auf den erhöhten Fettbedarf der Patienten) und zum anderen werden mögliche Unverträglichkeitserscheinungen weitgehend ausgeschlossen und wird mit dem erfindungsgemäß angewandten Fettsäuremuster das Immunsystem des Tumorpatienten in idealer Weise unterstützt, ohne daß im Hinblick auf eine Langzeiternährung unerwünschte Nebenwirkungen auftreten.

Die nachfolgenden Beispiele dienen der weiteren Erläuterung der vorliegenden Erfindung.

Das in den Beispielen angewandte Fischöl enthielt mindestens 30 Gew.-% Eicosapentaensäure und Docosahexaensäure.

### Beispiel 1

Aus den folgenden Fettbestandteilen wurde durch einfaches Vermischen dieser Bestandteile ein erfindungsgemäßes Präparat zur enteralen Ernährung hergestellt:

| | |
|---|---|
| Fischöl | 6,5 g |
| Leinöl | 2,0 g |
| ölsäurereiches Sonnenblumenöl | 37,0 g |
| Safloröl | 4,0 g |
| mittelkettige Triglyceride | 22,7 g |

Dieser Fettmenge (72,2 g) entsprechen 68,6 g Fettsäuren. Das so hergestellte Präparat wies entsprechend folgendes Fettsäuremuster (g Fettsäure/100 g Gesamtfettsäure) auf:

| | |
|---|---|
| Ölsäure | 41,5 g |
| Linolsäure | 10,5 g |
| alpha-Linolensäure | 1,6 g |
| Eicosapentaensäure | 1,6 g |
| Docosahexaensäure | 0,8 g |
| sonstige Omega-3-Fettsäuren | 0,2 g |

Das Verhältnis der Omega-3-Fettsäuren zu den Omega-6-Fettsäuren betrug 1:2,5.
Neben den vorstehend genannten Fettsäuren, die für das Fettsäuremuster des erfindungsgemäßen Präparates charakteristisch sind, sind in dem erfindungsgemäßen Präparat die folgenden Fettsäuren enthalten:

### Mittelkettige Fettsäuren:

| | |
|---|---|
| Caprylsäure | 17,6 g |
| Caprinsäure | 11,6 g |

### Langkettige Fettsäuren:

| | |
|---|---|
| Palmitinsäure | 3,7 g |
| Stearinsäure | 1,8 g |

| | |
|---|---|
| Sonstige Fettsäuren | 9,0 g |

Das so hergestellte erfindungsgemäße Präparat kann als solches verabreicht werden, z.B. in Form von Gelatinekapseln oder ist als Zusatz zu Nahrungskomponenten zur Herstellung von diätetischen Lebensmitteln, z.B. von Trink- und Sondennahrung, insbesondere für Tumorpatienten geeignet.

### Beispiel 2

Das in Beispiel 1 hergestellte Präparat (72,2 g Fett, entsprechend 68,6 g Fettsäuren) wurde zur Herstellung von 1000 ml eines weiteren erfindungsgemäßen Präparates zur enteralen Ernährung mit den folgenden weiteren Bestandteilen vermischt:

### Eiweißkomponente:

| | |
|---|---|
| Natrium-Caseinat | entspr. 40,5 g Eiweiß |
| Hefe-RNA | entspr. 8,0 g Eiweiß |
| Molkenproteinhydrolysat | entspr. 10,0 g Eiweiß |

### Kohlenhydratkomponente:

| | |
|---|---|
| Maltodextrin | entspr. 104,0 g Kohlenhydrat |

### Ballaststoffe:

| | |
|---|---|
| Sojapolysaccharide | entspr. 13,0 g Ballastst. |
| Wasser (entmineralisiert) | 800 ml |

### Vitamine und Mineralstoffe:

| | |
|---|---|
| Vitamin D₃-Trockenpulver (100.000IE/g) | 4,05 mg |
| Biotin | 0,176 mg |
| Folsäure | 0,40 mg |
| Thiaminhydrochlorid (B₁) | 2,84 mg |
| Riboflavin 5 Phosphat Na 2H₂O (B₂) | 4,32 mg |
| Pyridoxinhydrochlorid (Vit. B₆) | 3,105 mg |
| Vitamin-B₁₂-Lactone-Verreib.0,5% | 1,62 mg |
| Nicotinsäureamid | 15,19 mg |
| Calcium-D-pantothenat | 13,2 mg |
| L-Ascorbinsäure (Vit. C) | 350 mg |
| Vitamin A-palmitat (1,7MioIE/g) | 6,27 mg |
| Vitamin K₁ | 133,3 µg |
| DL-alpha-Tocopherolacetat | 50,3 mg |
| tri-Calciumphosphat | 0,05 g |
| Calciumcarbonat | 1,21 g |
| Magnesiumchlorid (6H₂O) | 0,74 g |
| Magnesiumoxid | 0,17 g |
| Kaliumchlorid | 1,48 g |
| tri-Kaliumcitrat (1H₂O) | 2,1 g |
| Natriumchlorid | 0,69 g |
| tri-Natriumcitrat (1H₂O) | 1,36 g |
| Eisen-III-pyrophosphat (9H₂O) | 47 mg |
| Zink-II-sulfat (7H₂O) | 22,2 mg |
| Mangan-II-chlorid (4H₂O) | 6,5 mg |
| Kupfer-II-sulfat | 5,577 mg |
| Kaliumjodid | 145 µg |
| Chrom-III-chlorid (6H₂O) | 563,7 µg |
| Natriummolybdat (2H₂O) | 277,4 µg |
| Natriumfluorid | 3,242 mg |
| Citronensäure kristallwasserfrei | 0,7 g |
| myo-Inosit | 160 mg |
| Cholinchlorid | 0,36 g |

In dem so hergestellten Präparat, das eine Energiedichte von 1,3 kcal/ml aufwies, machte die Fettkomponente 50 Energie-%, die Eiweißkomponente 18 Energie-% und die Kohlenhydratkomponente 32 Energie-% aus.

Das erfindungsgemäße Präparat ist zur Verwendung als diätetisches Lebensmittel, z.B. Trink- und Sondennahrung, insbesondere für Tumorpatienten geeignet.

### Beispiel 3

Aus den folgenden Fettbestandteilen wurde durch Vermischen ein erfindungsgemäßes Präparat zur enteralen Ernährung hergestellt:

| | |
|---|---|
| Fischöl | 6,5 g |
| Leinöl | 1,9 g |
| ölsäurereiches Sonnenblumenöl | 37,0 g |
| Safloröl | 4,3 g |
| mittelkettige Triglyceride | 22,5 g |

Diese Fettmenge (72,2 g) entsprach 68,6 g Fettsäuren. Das so erhaltene Präparat zeigte entsprechend das folgende Fettsäuremuster (g Fettsäure/100 g Gesamtfettsäuren):

| | |
|---|---|
| Ölsäure | 41,4 g |
| Linolsäure | 10,2 g |
| alpha-Linolensäure | 1,6 g |
| Eicosapentaensäure | 1,6 g |
| Docosahexaensäure | 0,8 g |
| sonstige Omega-3-Fettsäuren | 0,2 g |

Das Verhältnis der Omega-3-Fettsäuren zu den Omega-6-Fettsäuren betrug 1:2,45. Zusätzlich zu den vorstehend genannten Fettsäuren wies das Fettsäuremuster noch die folgenden Fettsäuren auf:

### Mittelkettige Fettsäuren:

| | |
|---|---|
| Caprylsäure | 17,9 g |
| Caprinsäure | 11,7 g |

### Langkettige Fettsäuren:

| | |
|---|---|
| Palmitinsäure | 3,7 g |
| Stearinsäure | 1,8 g |

| | |
|---|---|
| Sonstige Fettsäuren | 9,1 g |

Das so hergestellte Präparat kann direkt als enteral zu verabreichendes Präparat eingesetzt werden, z.B. abgefüllt in Gelatinekapseln, oder kann auch als Zusatz zu anderen Nahrungskomponenten zur Herstellung von anderen enteral zu verabreichenden diätetischen Lebensmitteln, z.B. Trink- und Sondennahrung, insbesondere für Tumorpatienten verwendet werden.

### Beispiel 4

Zur Herstellung eines weiteren erfindungsgemäßen Präparates wurde das Beispiel 2 wiederholt mit der Ausnahme, daß anstelle des Präparates gemäß Beispiel 1 das im Beispiel 3 hergestellte Präparat (72,2 g Fett entsprechend 68,6 g Fettsäure) verwendet wurde.

Die Nährstoffrelation betrug: Fett 50 Energie%, Eiweiß 18 Energie% und Kohlenhydrate 32 Energie% pro 1000 ml (der Energiegehalt betrug 1,3 kcal/ml).

Das so hergestellte erfindungsgemäße Präparat ist zur Verwendung als diätetisches Lebensmittel, z.B. als Trink- und Sondennahrung, insbesondere für onkologische Patienten geeignet.

### Beispiel 5

Aus den folgenden Fettbestandteilen wurde durch Vermischen ein erfindungsgemäßes Präparat zur enteralen Ernährung hergestellt:

| | |
|---|---|
| Fischöl | 6,5 g |
| Leinöl | 1,9 g |
| ölsäurereiches Sonnenblumenöl | 37,0 g |
| Safloröl | 4,75 g |
| mittelkettige Triglyceride | 22,0 g |

Diese Fettmenge (72,15 g Fett) entspricht 68,55 g Fettsäuren. Das so hergestellte Präparat wies entsprechend das folgende Fettsäuremuster (angegeben in g Fettsäure pro 100 g Gesamtfettsäuren) auf:

| | |
|---|---|
| Ölsäure | 41,6 g |
| Linolsäure | 10,6 g |
| alpha-Linolensäure | 1,6 g |
| Eicosapentaensäure | 1,6 g |
| Docosanhexaensäure | 0,8 g |
| sonstige Omega-3-Fettsäuren | 0,2 g |

Das Verhältnis der Omega-3-Fettsäuren zu Omega-6-Fettsäuren betrug 1:2,55. Zusätzlich zu den vorstehend genannten Fettsäuren wies das Fettsäuremuster noch die folgenden Fettsäuren auf:

### Mittelkettige Fettsäuren:

| | |
|---|---|
| Caprylsäure | 17,6 g |
| Caprinsäure | 11,4 g |

### Langkettige Fettsäuren:

| | |
|---|---|
| Palmitinsäure | 3,8 g |
| Stearinsäure | 1,8 g |

| | |
|---|---|
| Sonstige Fettsäuren | 9,0 g |

Dieses Produkt kann sowohl als Präparat zur enteralen Ernährung, z.B. abgefüllt in Gelatinekapseln, als auch als Zusatz zu anderen Nahrungskomponenten zur Herstellung von diätetischen Lebensmitteln, z.B. von Trink- und Sondennahrung, insbesondere für onkologische Patienten, verwendet werden.

### Beispiel 6

Zur Herstellung von 1000 ml eines weiteren Präparates zur enteralen Ernährung wurden die gleichen Bestandteile wie in Beispiel 2 beschrieben eingesetzt, mit der Ausnahme, daß anstelle von 72,2 g des Präparates gemäß Beispiel 1 (entsprechend 68,6 g Fettsäuren) 72,15 g des in Beispiel 5 hergestellten Präparates (entsprechend 68,55 g Fettsäure) verwendet wurden.

Die Nährstoffrelation des so hergestellten Präparates war folgende:
Fett 50 Energie-%
Eiweiß 18 Energie-%
Kohlenhydrate 32 Energie-%,
wobei der Energiegehalt pro ml 1,3 kcal betrug.

Das so hergestellte Präparat ist zur Verwendung als diätetisches Lebensmittel, z.B. als Trink- und Sondennahrung, insbesondere für onkologische Patienten geeignet.

### Beispiel 7

Aus den folgenden Fettbestandteilen wurde durch Vermischen dieser Bestandteile ein erfindungsgemäßes Präparat zur enteralen Ernährung hergestellt:

| | |
|---|---|
| Fischöl | 6,5 g |
| Leinöl | 1,9 g |
| ölsäurereiches Sonnenblumenöl | 44,5 g |
| Safloröl | 1,8 g |
| mittelkettige Triglyceride | 32,0 g |

Diese Menge an Fett (86,7 g) entspricht 82,4 g Fettsäuren.

Das so hergestellte Präparat hatte entsprechend folgendes Fettsauremuster (angegeben in g Fettsäure pro 100 g Gesamtfettsäuren):

| | |
|---|---|
| Ölsäure | 40,7 g |
| Linolsäure | 7,3 g |
| alpha-Linolensäure | 1,3 g |
| Eicosapentaensäure | 1,3 g |
| Docosahexaensäure | 0,7 g |
| sonstige Omega-3-Fettsäuren | 0,1 g |

Das Verhältnis von Omega-3-Fettsäuren zu Omega-6-Fettsäuren betrug 1:2,15. Zusätzlich zu den vorstehend genannten Fettsäuren umfaßt das Fettsäuremuster des vorliegenden Präparates noch die folgenden Fettsäuren:

### Mittelkettige Fettsäuren:

| | |
|---|---|
| Caprylsäure | 21,2 g |
| Caprinsäure | 13,8 g |

### Langkettige Fettsäuren:

| | |
|---|---|
| Palmitinsäure | 3,3 g |
| Stearinsäure | 1,7 g |

| | |
|---|---|
| Sonstige Fettsäuren | 8,6 g |

Das hergestellte Präparat war sowohl zur direkten Verwendung als Präparat zur enteralen Ernährung, z.B. abgefüllt in Gelatinekapseln, als auch als Zusatz zu weiteren Nahrungskomponenten zur Herstellung von diätetischen Lebensmitteln, z.B. von Trink- und Sondennahrung, insbesondere für onkologische Patienten, geeignet.

### Beispiel 8

Das in Beispiel 7 hergestellte Präparat (86,7 g Fett, die 82,4 g Fettsäuren entsprechen) wurde zur Herstellung von 1000 ml eines weiteren erfindungsgemäßen Präparates zur enteralen Ernährung mit den folgenden weiteren Bestandteilen vermischt:

### Eiweißkomponente:

| | |
|---|---|
| Natrium-Caseinat | entspr.. 33,8 g Eiweiß |
| Hefe-RNA | entspr.. 8 g Eiweiß |
| Sojaproteinhydrolysat | entspr. 7 g Eiweiß |

### Kohlenhydratkomponente:

| | |
|---|---|
| Modifizierte Stärke | entspr. 81 g Kohlenhydrat |
| Ballaststoffe aus Chicoree | entspr. 13 g Ballastst. |
| Wasser | 800 ml |

### Vitamine und Mineralstoffe:

Die Vitamine und Mineralstoffe wurden in Verbindungen wie sie in Beispiel 2 angegeben sind und in solchen Mengen angewandt, daß sie in dem fertigen Präparat in der folgenden Konzentration vorlagen:

| | |
|---|---|
| Natrium | 2000 mg |
| Kalium | 1670 mg |
| Chlorid | 1530 mg |
| Calcium | 1000 mg |
| Phosphor | 800 mg |
| Magnesium | 270 mg |
| Eisen | 13 mg |
| Zink | 17 mg |
| Kupfer | 2 mg |
| Mangan | 2 mg |
| Jodid | 133 µg |
| Chrom | 100 µg |
| Molybdän | 100 µg |
| Fluorid | 1,3 mg |
| Vitamin A/Retinol-Äquivalente | 0,2 mg |
| Vitamin D/Cholecalciferol | 6,7 µg |
| Vitamin E/Tocopherol-Äquivalente | 26,7 mg |
| Vitamin K₁ | 66,7 µg |
| Vitamin B₁ | 1,5 mg |
| Vitamin B₂ | 1,7 mg |
| Nicotinsäureamid | 1,2 mg |
| Vitamin B₆ | 1,6 mg |
| Vitamin B₁₂ | 4 µg |
| Pantothensäure | 8 mg |
| Biotin | 13,3 µg |
| Folsäure | 0,3 mg |
| Vitamin C | 8,0 mg |
| myo-Inosit | 160 mg |
| Cholin | 26,7 mg |

Das so hergestellte Präparat hatte folgende Nährstoffrelation: Fett 60 Energie-%, Eiweiß 15 Energie-% und Kohlenhydrate 25 Energie-%., der Energiegehalt betrug 1,3 kcal/ml.

Das so hergestellte Präparat war zur Verwendung als diätetisches Lebensmittel, insbesondere für onkologische Patienten, z.B. sowohl als Trink- als auch als Sondennahrung geeignet.

### Beispiel 9

Aus den folgenden Fettbestandteilen wurde durch Vermischen ein erfindungsgemäßes Präparat zur enteralen Ernährung hergestellt:

| | |
|---|---|
| Fischöl | 6,5 g |
| Leinöl | 1,9 g |
| ölsäurereiches Sonnenblumenöl | 44,0 g |
| Safloröl | 5,6 g |
| mittelkettige Triglyceride | 28,6 g |

Diese Fettmenge (86,6 g) entsprach 82,3 g Fettsäuren. Entsprechend dem vorstehend eingesetzten Fett ergab sich für das erfindungsgemäße Präparat das folgende Fettsäuremuster (g Fettsäure pro 100 g Gesamtfettsäuren):

| | |
|---|---|
| Ölsäure | 40,7 g |
| Linolsäure | 10,4 g |
| alpha-Linolensäure | 1,3 g |
| Eicosapentaensäure | 1,3 g |
| Docosahexaensäure | 0,7 g |
| sonstige Omega-3-Fettsäuren | 0,2 g |

Das Verhältnis aus Omega-3-Fettsäuren zu Omega-6-Fettsäuren betrug 1:2,97.

Zusätzlich zu den vorstehend genannten Fettsäuren enthielt das Fettsäuremuster des vorstehend hergestellten Präparates noch folgende Säuren:

### Mittelkettige Fettsäuren:

| | |
|---|---|
| Caprylsäure | 19,0 g |
| Caprinsäure | 12,4 g |

### Langkettige Fettsäuren:

| | |
|---|---|
| Palmitinsäure | 3,5 g |
| Stearinsäure | 1,8 g |

| | |
|---|---|
| Sonstige Fettsauren | 8,7 g |

Das vorstehend hergestellte Präparat konnte sowohl zur enteralen Ernährung als solches verabreicht werden, z.B. abgefüllt in Gelatinekapseln, als auch als Zusatz zu anderen Nahrungskomponenten zur Herstellung von diätetischen Lebensmitteln, z.B. von Trink- und Sondennahrung, insbesondere für onkologische Patienten, verwendet werden.

### Beispiel 10

Zur Herstellung von 1000 ml eines weiteren erfindungsgemäßen Präparates zur enteralen Ernährung wurde das im Beispiel 9 hergestellte Präparat (86,6 g Fett, entsprechend 82,3 g Fettsäuren) mit den gleichen weiteren Bestandteilen, wie sie gemäß Beispiel 8 verwendet wurden und in den in diesem Beispiel angegebenen Mengen dieser Bestandteile vermischt.

Das so hergestellte Präparat hatte folgende Nährstoffrelation: Fett 60 Energie%, Eiweiß 15 Energie%, Kohlenhydrate 25 Energie%. Der Energiegehalt betrug 1,3 kcal/ml.

Das Präparat dieses Beispiels konnte als diätetisches Lebensmittel z.B. sowohl als Trink- als auch als Sondenahrung für Patienten, insbesondere onkologische Patienten, eingesetzt werden.

### Beispiel 11

Aus den folgenden Fettbestandteilen wurde durch Vermischen ein weiteres erfindungsgemäßes Präparat zur enteralen Ernährung hergestellt:

| | |
|---|---|
| Fischöl | 6,5 g |
| Leinöl | 1,9 g |
| ölsäurereiches Sonnenblumenöl | 37,0 g |
| Safloröl | 3,7 g |
| mittelkettige Triglyceride | 15,9 g |

Diese Fettmenge (65 g) entspricht 61,75 g Fettsäuren.

Das Fettsäuremuster des so hergestellten Präparates sah folgendermaßen aus (g Fettsäure pro 100 g Gesamtfettsäuren):

| | |
|---|---|
| Ölsäure | 46,0 g |
| Linolsäure | 10,6 g |
| alpha-Linolensäure | 1,8 g |
| Eicosapentaensäure | 1,8 g |
| Docosahexaensäure | 0,9 g |
| sonstige Omega-3-Fettsäuren | 0,1 g |

Das Verhältnis der Omega-3-Fettsäuren zu den Omega-6-Fettsäuren betrug 1:2,3. Zusätzlich zu den vorstehend genannten Fettsäuren umfaßte das Fettsäuremuster dieses Präparates die folgenden Fettsäuren:

### Mittelkettige Fettsäuren:

| | |
|---|---|
| Caprylsäure | 14,0 g |
| Caprinsäure | 9,2 g |

### Langkettige Fettsäuren:

| | |
|---|---|
| Palmitinsäure | 4,1 g |
| Stearinsäure | 2,0 g |

| | |
|---|---|
| Sonstige Fettsäuren | 9,5 g |

Dieses Präparat war als solches für die Verabreichung an Patienten, insbesondere an onkologische Patienten, z.B. abgefüllt in Gelatinekapseln, sowie als Zusatz zu anderen Nahrungskomponenten zur Herstellung von diätetischen Lebensmitteln, z.B. von Trink- und Sondennahrung, für onkologische Patienten geeignet.

### Beispiel 12

Unter Verwendung des in Beispiel 11 hergestellten Präparates (65 g Fett, entsprechend 61,75 g Fettsäuren) wurden durch einfaches Vermischen mit den folgenden Bestandteilen 1000 ml eines erfindungsgemäßen Präparates zur enteralen Ernährung hergestellt:

### Eiweißkomponente:

| | |
|---|---|
| Natrium-Caseinat | entspr. 42 g Eiweiß |
| Hefe-RNA | entspr. 8 g Eiweiß |
| Molkenproteinhydrolysat | entspr. 15,0 g Eiweiß |

### Kohlenhydratkomponente:

| | |
|---|---|
| Maltodextrine und Hafermehl | entspr.114 g Kohlenhydrat |

### Ballaststoffe:

| | |
|---|---|
| Gemisch aus Hafer-, Roggen- und Weizenflocken und Weizenkleie entspr. | 13 g Ballastst. |
| Wasser | 800 ml |

### Vitamine und Mineralstoffe:

Die Vitamine und Mineralstoffe wurden in der gleichen Art und in den gleichen Mengen verwendet, wie sie gemäß Beispiel 8 verwendet wurden.

Das Präparat zeigte die folgende Nährstoffrelation: Fett 45 Energie-%, Eiweiß 20 Energie-%, Kohlenhydrate 35 Energie-%, der Energiegehalt pro ml betrug 1,3 kcal.

Das vorstehend hergestellte Präparat war als diätetisches Lebensmittel, z.B. sowohl als Trinkals auch als Sondennahrung insbesondere für onkologische Patienten geeignet.

### Beispiel 13

Zur Herstellung von 1000 ml eines weiteren erfindungsgemäßen Präparates zur enteralen Ernährung wurden die folgenden Bestandteile miteinander vermischt:

### Fettkomponente:

| | |
|---|---|
| Fischöl | 6,5 g |
| Leinöl | 1,9 g |
| ölsäurereiches Sonnenblumenöl | 37,0 g |
| Safloröl | 5,4 g |
| mittelkettige Triglyceride | 14,2 g |
| (Summe des verwendeten Fettes 65 g, entsprechend 61,75 g Fettsäuren). | |

### Eiweißkomponente:

| | |
|---|---|
| Natrium-Caseinat | entspr. 42 g Eiweiß |
| Hefe-RNA | entspr. 8 g Eiweiß |
| Molkenproteinhydrolysat | entspr. 15,0 g Eiweiß |

### Kohlenhydratkomponente:

| | |
|---|---|
| Maltodextrine und Hafermehl | entspr. 114 g Kohlenhydrat |

### Ballaststoffe:

| | |
|---|---|
| Gemisch aus Hafer-, Roggen- und Weizenflocken und Weizenkleie entspr. | 13 g Ballastst. |
| Wasser | 800 ml |

### Vitamine und Mineralstoffe:

Die verwendeten Vitamine und Mineralstoffe entsprachen den in Beispiel 12 verwendeten Vitaminen und Mineralstoffen in den dort angegebenen Mengen.

Das so hergestellte Präparat hatte das folgende Fettsäuremuster (g Fettsäure pro 100 g Gesamtfettsäuren):

| | |
|---|---|
| Ölsäure | 46,3 g |
| Linolsäure | 12,5 g |
| alpha-Linolensäure | 1,8 g |
| Eicosapentaensäure | 1,8 g |
| Docosahexaensäure | 0,9 g |
| sonstige Omega-3-Fettsäuren | 0,2 g |

Das Verhältnis der Omega-3-Fettsäuren zu den Omega-6-Fettsäuren betrug 1:2,66. Zusätzlich zu den vorstehend genannten Fettsäuren enthielt das Fettsäuremuster des hergestellten Präparates noch folgende Fettsäuren:

### Mittelkettige Fettsäuren:

| | |
|---|---|
| Caprylsäure | 12,5 g |
| Caprinsäure | 8,2 g |

### Langkettige Fettsäuren:

| | |
|---|---|
| Palmitinsäure | 4,2 g |
| Stearinsäure | 2,0 g |

| | |
|---|---|
| Sonstige Fettsäuren | 9,6 g |

Das hergestellte Produkt besaß folgende Nährstoffrelation: Fett 45 Energie-%, Eiweiß 20 Energie-%, Kohlenhydrate 35 Energie-%, wobei der Energiegehalt pro ml 1,3 kcal betrug.

Das hergestellte Präparat war zur Verwendung als diätetisches Lebensmittel, insbesondere für onkologische Patienten, z. B. sowohl als Trink- als auch als Sondenahrung geeignet.

### Beispiel 14

Aus den folgenden Fettbestandteilen wurde durch Vermischen ein weiteres erfindungsgemäßes Präparat zur enteralen Ernährung hergestellt:

| | |
|---|---|
| Fischöl | 7,7 g |
| Leinöl | 1,1 g |
| ölsäurereiches Sonnenblumenöl | 3,7 g |
| Safloröl | 36,5 g |
| mittelkettige Triglyceride | 18,2 g |

Diese Fettmenge (67,2 g Fett) entspricht 63,8 g Fettsäuren.

Das so hergestellte Präparat wies folgendes Fettsäuremuster (g Fettsäure pro 100 g Gesamtfettsäuren) auf:

| | |
|---|---|
| Ölsäure | 43,7 g |
| Linolsäure | 10 g |
| alpha-Linolensäure | 1,1 g |
| Eicosapentaensäure | 2,0 g |
| Docosahexaensäure | 1,0 g |
| Sonstige Omega-3-Fettsäuren | 0,2 g |

Das Verhältnis der Omega-3-Fettsäuren zu der Omega-6-Fettsäure betrug 1:2,3. Zusätzlich zu den vorstehend genannten Fettsäuren umfaßte das Fettsäuremuster des hergestellten Präparates die folgenden Fettsauren:

### Mittelkettige Fettsäuren:

| | |
|---|---|
| Caprylsäure | 15,6 g |
| Caprinsäure | 10,2 g |

### Langkettige Fettsäuren:

| | |
|---|---|
| Palmitinsäure | 4,1 g |
| Stearinsäure | 1,9 g |

| | |
|---|---|
| Sonstige Fettsäuren | 10,2 g |

Dieses Präparat war als solches für die Verabreichung an Patienten, insbesondere an onkologische Patienten, z.B. abgefüllt in Gelatinekapseln, sowie als Zusatz zu anderen Nahrungskomponenten zur Herstellung von diätetischen Lebensmitteln, z.B. von Trink- und Sondennahrung für onkologische Patienten geeignet.

### Beispiel 15

Unter Verwendung des in Beispiel 14 hergestellten Präparates (67,2 g Fett, entsprechend 63,8 g Fettsäuren) wurden durch einfaches Vermischen mit den folgenden Bestandteilen 1000 ml eines erfindungsgemäßen Präparates zur enteralen Ernährung hergestellt:

### Eiweißkomponente:

| | |
|---|---|
| Natriumcaseinat | entspr. 39 g Eiweiß |
| Hefe-RNA | entspr. 8 g Eiweiß |
| Molkenproteinhydrolysat | entspr. 8 g Eiweiß |

### Kohlenhydratkomponente:

| | |
|---|---|
| Maltodextrin | entspr. 69 g Kohlenhydrat |

### Ballaststoffe:

| | |
|---|---|
| Ballaststoffe aus Chicoree | entspr. 13 g Ballastst. |
| Wasser | 800 ml |

### Vitamine und Mineralstoffe:

Die Vitamine und Mineralstoffe wurden in Verbindungen, wie sie in Beispiel 2 angegeben wurden und in solchen Mengen angewandt, daß sie in dem fertigen Präparat in der folgenden Konzentration vorlagen:

| | |
|---|---|
| Natrium | 750 mg |
| Kalium | 1250 mg |
| Chlorid | 1150 mg |
| Calcium | 750 mg |
| Phosphor | 600 mg |
| Magnesium | 200 mg |
| Eisen | 10 mg |
| Zink | 7,5 mg |
| Kupfer | 1,0 mg |
| Mangan | 1,5 mg |
| Iodid | 100 µg |
| Chrom | 75 µg |
| Molybdän | 150 µg |
| Vitamin A | 0,6 mg |
| Vitamin D | 5 µg |
| Vitamin E | 10 mg |
| Vitamin K₁ | 50 µg |
| Vitamin B₁ | 1,1 mg |
| Vitamin B₂ | 1,3 mg |
| Nicotinsäureamid | 9 mg |
| Vitamin B₆ | 1,2 mg |
| Vitamin B₁₂ | 3 µg |
| Pantothensäure | 6 mg |
| Folsäure | 0,2 mg |
| Vitamin C | 50 mg |
| myo-Inosit | 120 mg |

Das so hergestellte Präparat hatte folgende Nährstoffrelation:
Fett 55 Energieprozent, Eiweiß 20 Energieprozent und Kohlenhydrate 25, Energieprozent, der Energiegehalt betrug 1,1 kcal/ml.

Das Präparat war als diätetisches Lebensmittel, z.B. sowohl als Trink- als auch als Sondennahrung insbesondere für onkologische Patienten geeignet.

### Beispiel 16

Aus den folgenden Fettbestandteilen wurde durch Vermischen ein weiteres erfindungsgemäßes Präparat zur enteralen Ernährung hergestellt:

| | |
|---|---|
| Fischöl | 6,4 g |
| Leinöl | 2,7 g |
| ölsäurereiches Sonnenblumenöl | 65,0 g |
| Safloröl | 2,65 g |
| Mittelkettige Troglyceride | 36,6 g |

Diese Fettmenge (113,35 g Fett) entspricht 107,68 g Fettsäuren.

Das Fettsäuremuster des so hergestellten Präparates war folgendes (g Fettsäure pro 100 g Gesamtfettsäuren):

| | |
|---|---|
| Ölsäure | 45,3 g |
| Linolsäure | 8,1 g |
| alpha-Linolensäure | 1,4 g |
| Eicosapentaensäure | 1,0 g |
| Docosahexaensäure | 0,5 g |
| Sonstige Omega-3-Fettsäuren | 0,1 g |

Das Verhältnis der Omega-3-Fettsäuren zu den Omega-6-Fettsäuren betrug 1:2,7. Zusätzlich zu den vorstehend genannten Fettsäuren umfaßte das Fettsäuremuster dieses Präparates die folgenden Fettsäuren:

### Mittelkettige Fettsäuren:

| | |
|---|---|
| Caprylsäure | 18,6 g |
| Caprinsäure | 12,2 g |

### Langkettige Fettsäuren:

| | |
|---|---|
| Palmitinsäure | 3,3 g |
| Stearinsäure | 1,8 g |

| | |
|---|---|
| Sonstige Fettsäuren | 7,7 g |

Das so hergestellte Präparat war als solches für die Verabreichung an Patienten, insbesondere an onkologische Patienten, z.B. abgefüllt in Gelatinekapseln, sowie als Zusatz zu anderen Nahrungskomponenten zur Herstellung von diätetischen Lebensmitteln, z.B. von Trink- und Sondennahrung, für onkologische Patienten geeignet.

### Beispiel 17

Unter Verwendung des in Beispiel 16 hergestellten Präparates (113,35 g Fett, entsprechend 107,68 g Fettsäuren) wurden durch einfaches Vermischen mit den folgenden Bestandteilen 1000 ml eines erfindungsgemäßen Präparates zur enteralen Ernährung hergestellt:

### Eiweißkomponente:

| | |
|---|---|
| Natriumcaseinat | entspr. 46 g Eiweiß |
| Hefe-RNA | entspr. 8 g Eiweiß |
| Molkenproteinhydrolysat | entspr. 14 g Eiweiß |

### Kohlenhydratkomponente:

| | |
|---|---|
| Maltodextrin | entspr. 102 g Kohlenhydrat |
| Wasser | 720 ml |

### Vitamine und Mineralstoffe:

Die Vitamine und Mineralstoffe wurden in Verbindungen, wie sie in Beispiel 2 angegeben sind und in solchen Mengen angewandt, daß sie in dem fertigen Präparat in der folgenden Konzentration vorlagen:

| | |
|---|---|
| Natrium | 1000 mg |
| Kalium | 2000 mg |
| Chlorid | 1530 mg |
| Calcium | 670 mg |
| Phosphor | 670 mg |
| Magnesium | 270 mg |
| Eisen | 13 mg |
| Zink | 10 mg |
| Kupfer | 1,3 mg |
| Mangan | 2,7 mg |
| Iodid | 100 µg |
| Chrom | 100 µg |
| Molybdän | 100 µg |
| Vitamin A | 0,8 mg |
| Vitamin D | 7 µg |
| Vitamin E | 11 mg |
| Vitamin K₁ | 100 µg |
| Vitamin B₁ | 1,5 mg |
| Vitamin B₂ | 1,7 mg |
| Nicotinsäureamid | 12 mg |
| Vitamin B₆ | 1,6 mg |
| Vitamin B₁₂ | 4 µg |
| Pantothensäure | 8 mg |
| Biotin | 130 µg |
| Folsäure | 270 µg |
| Vitamin C | 60 mg |
| myo-Inosit | 160 mg |
| Cholin | 267 mg |

Die Nährstoffrelation des hergestellten Präparates war folgende: Fett 60 Energieprozent, Eiweiß 16 Energieprozent, Kohlenhydrate 24 Energieprozent, der Energiegehalt pro ml betrug 1,7 kcal/ml.

Das so hergestellte Präparat war als diätetisches Lebensmittel, z.B. sowohl als Trink- als auch als Sondennahrung insbesondere für onkologische Patienten geeignet.

## Patentansprüche

1. Präparat zur enteralen Ernährung, insbesondere von onkologischen Patienten, enthaltend Fette und gegebenenfalls Kohlenhydrate und/oder Proteine sowie ggf. andere übliche Nährstoffe, Hilfs- und Zusatzstoffe, dadurch gekennzeichnet, daß das Fett das folgende Fettsäuremuster, angegeben in Gewichtsprozent, bezogen auf den Gesamtfettsäuregehalt, aufweist und die Fettsäuren sowohl in freier Form als auch in Form von verträglichen Salzen und/oder Estern vorliegen:
| | |
|---|---|
| Ölsäure | 30-55 Gew.-% |
| Linolsäure | 3-20 Gew.-% |
| alpha-Linolensäure | 0,5-8 Gew.-% |
| Eicosapentaensäure und Docosahexaensäure zusammen | 1-10 Gew.-%, |
| sonstige Omega-3-Fettsäuren | 0-0,5 Gew.-%, |
wobei das Verhältnis der Omega-3-Fettsäuren zu den Omega-6-Fettsäuren im Bereich von 1:2,1 bis 1:3 liegt.

2. Präparat nach Patentanspruch 1, dadurch gekennzeichnet, daß es folgendes Fettsäuremuster, angegeben in Gew.-%, bezogen auf den Gesamtfettsäuregehalt, aufweist:
| | |
|---|---|
| Ölsäure | 37-50 Gew.-% |
| Linolsäure | 5-15 Gew.-% |
| alpha-Linolensäure | 0,8-5 Gew.-% |
| Eicosapentaensäure und Docosahexaensäure zusammen | 1,5-5 Gew.-%, |
| sonstige Omega-3-Fettsäuren | 0-0,3 Gew.-%, |
wobei das Verhältnis der Omega-3-Fettsäuren zu den Omega-6-Fettsäuren im Bereich von 1:2,3 bis 1:2,7 liegt.

3. Präparat nach Patentanspruch 2, dadurch gekennzeichnet, daß es folgendes Fettsäuremuster, angegeben in Gew.-%, bezogen auf den Gesamtfettsäuregehalt, aufweist:
| | |
|---|---|
| Ölsäure | 40-47 Gew.-% |
| Linolsäure | 7-13 Gew.-% |
| alpha-Linolensäure | 1-2 Gew.-% |
| Eicosapentaensäure und Docosahexaensäure zusammen | 2-3,5 Gew.-%, |
| sonstige Omega-3-Fettsäuren | 0-0,2 Gew.-%, |
wobei das Verhältnis der Omega-3-Fettsäuren zu den Omega-6-Fettsäuren im Bereich von 1:2,3 bis 1:2,7 liegt.

4. Präparat nach Patentanspruch 3, dadurch gekennzeichnet, daß das Verhältnis der Omega-3-Fettsäuren zu den Omega-6-Fettsäuren im Bereich von 1:2,4 bis 1:2,6 liegt.

5. Präparat nach Patentansprüchen 1 bis 4, dadurch gekennzeichnet, daß alle Fettsäuren oder ein Teil derselben in Form von Ölen angewandt werden.

6. Präparat nach Patentanspruch 5, dadurch gekennzeichnet, daß die Ölsäure in Form eines Pflanzenöles angewandt wird, das mindestens 75 % Ölsäure enthält.

7. Präparat nach Patentansprüchen 1 bis 6, dadurch gekennzeichnet, daß die Linolsäure durch ein linolsäurereiches Öl, welches mindestens 70 % Linolsäure enthält, angewandt wird.

8. Präparat nach Patentansprüchen 1 bis 7, dadurch gekennzeichnet, daß der Gehalt an alpha-Linolensäure durch ein Öl eingebracht wird, welches mindestens 45 % alpha-Linolensäure enthält.

9. Präparat nach Patentansprüchen 1 bis 8, dadurch gekennzeichnet, daß der Gehalt an Eicosapentaensäure und Docosahexaensäure durch ein Fischöl eingebracht wird, welches mindestens 30 % Omega-3-Fettsäuren enthält.

10. Präparat nach Patentanspruch 1-9, dadurch gekennzeichnet, daß das Fettsäuremuster auch mittelkettige Triglyceride in einer Menge im Bereich von 10-60 Gew.-%, bezogen auf die gesamte Fettmenge, umfaßt.

11. Präparat nach Patentansprüchen 1 bis 10, dadurch gekennzeichnet, daß in dem Präparat der Fettgehalt 40 bis 65 Energieprozent, der Proteingehalt 12 bis 25 Energieprozent und der Kohlenhydratgehalt 20 bis 45 Energieprozent ausmachen.

12. Präparat nach Patentanspruch 11, dadurch gekennzeichnet, daß der Fettgehalt 45 bis 60 Energieprozent, der Proteingehalt 15 bis 22 Energieprozent und der Kohlenhydratgehalt 25 bis 40 Energieprozent ausmachen.

13. Präparat nach Patentanspruch 12, dadurch gekennzeichnet, daß der Fettgehalt des Präparates 50 Energieprozent, der Proteingehalt 18 Energieprozent und der Kohlenhydratgehalt 32 Energieprozent ausmachen.

14. Präparat nach Patentansprüchen 1 bis 13, dadurch gekennzeichnet, daß es zusätzlich Nukleotide enthält.

15. Präparat nach Patentansprüchen 1 bis 14, dadurch gekennzeichnet, daß es Vitamine, Mineralstoffe und/oder Spurenelemente enthält.

16. Präparat nach Patentansprüchen 1-15, dadurch gekennzeichnet, daß es Ballaststoffe enthält.

17. Präparat nach Patentansprüchen 1 bis 16, dadurch gekennzeichnet, daß es in Form von Trink- und/oder Sondennahrung vorliegt.
